# EUROPÄISCHE PATENTANMELDUNG

(11) **EP 3 916 826 A1**
(43) Veröffentlichungstag der Anmeldung: **01.12.2021**
(21) Anmeldenummer: 20177373.6
(22) Anmeldetag: 29.05.2020
(51) Int. Cl.: H01M 2/02, H01M 10/04, H01M 10/42, H01M 10/48

(54) **ELEKTROCHEMISCHE ZELLE**

(71) Anmelder: VARTA Microbattery GmbH, 73479 Ellwangen Jagst (DE)
(72) Erfinder: Elmer, Martin, 73479 Ellwangen (DE); Ensling, David, 73479 Ellwangen (DE); Pytlik, Edward, 73479 Ellwangen (DE); Stock, Stefan, 73492 Rainau (DE)
(74) Vertreter: Patentanwaltskanzlei Cartagena

(57) **Zusammenfassung**

Eine elektrochemische Zelle (10) umfasst mindestens eine bandförmige negative Elektrode und mindestens eine bandförmige positive Elektrode. Die mindestens eine negative Elektrode und die mindestens eine positive Elektrode bilden dabei einen Verbund und sind durch mindestens einen Separator voneinander getrennt. Dieser Verbund ist spiralförmig um eine Wickelachse (14) gewickelt und bildet einen Wickel (19). Der Wickel (19) umfasst einen zentralen Hohlraum (20), durch den die Wickelachse (14) verläuft. Die Zelle weist ein Gehäuse mit einer ersten und einer zweiten Stirnseite (11, 12) und einem ringförmigen Gehäusemantel (13) auf, das einen Innenraum, in dem der Wickel (19) angeordnet ist, dichtend umschließt. In dem zentralen Hohlraum (20) ist mindestens ein Sensormittel (24, 21) oder mindestens ein Teil eines Sensormittels (25) angeordnet, das Zustandsänderungen des Wickels (19) qualitativ und/oder quantitativ erfassen kann. An der ersten und/oder der zweiten Stirnseite (11, 12) befindet sich ein Anzeige- und/oder Kontaktmittel (23), das von dem mindestens einen Sensormittel erfasste Messwerte anzeigen kann und/oder über das diese Messwerte an eine Empfangs- und/oder Auswerteeinheit übertragen werden können.

## Beschreibung

Die vorliegende Erfindung betrifft eine elektrochemische Zelle, insbesondere eine sekundäre elektrochemische Zelle, und ein Verfahren zur Herstellung einer derartigen elektrochemischen Zelle.

In elektrochemischen Zellen findet eine elektrochemische, energieliefernde Reaktion statt, welche sich aus zwei elektrisch miteinander gekoppelten, aber räumlich voneinander getrennten Teilreaktionen zusammensetzt. Eine bei vergleichsweise niedrigerem Redoxpotential stattfindende Teilreaktion läuft an der negativen Elektrode ab, eine bei vergleichsweise höherem Redoxpotential an der positiven Elektrode. Bei der Entladung werden an der negativen Elektrode durch einen Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zum Zwecke des Ladungsausgleichs zu einem der Elektrodenreaktion entsprechenden lonenstrom innerhalb der elektrochemischen Zellen. Dieser lonenstrom durchquert den Separator und wird durch einen ionenleitenden Elektrolyten gewährleistet.

In sekundären (wieder aufladbaren) elektrochemischen Zellen ist diese Entladereaktion reversibel, es besteht also die Möglichkeit, die bei der Entladung erfolgte Umwandlung chemischer Energie in elektrische Energie umzukehren.

Werden im Zusammenhang mit sekundären elektrochemischen Zellen die Begriffe "Anode" und "Kathode" benutzt, benennt man die Elektroden in der Regel entsprechend ihrer Entladefunktion. Die negative Elektrode in solchen Zellen ist also die Anode, die positive Elektrode die Kathode.

Ein bekanntes Beispiel für ein sekundäre elektrochemische Zelle ist die Lithium-Ionen-Zelle. Diese umfasst Elektroden, die Lithiumionen reversibel aufnehmen und wieder abgeben können, sowie einen Lithiumionen enthaltenden Elektrolyten.

Lithium-Ionen-Zellen enthalten ihre Elektroden und Separatoren in aller Regel in Form eines Verbundkörpers. Bei einem solchen Verbundkörper kann es sich um einen Zellenstapel (stack), aus mehreren Zellen handeln. Meist ist der Verbundkörper aber eine Einzelzelle in gewickelter Form (Wickelverbundkörper oder kurz Wickelzelle).

In den Verbundkörpern liegen in der Regel positive und negative Elektroden sowie Separatoren flach aufeinander. Meist sind die Elektroden und Separatoren beispielsweise durch Lamination oder durch Verklebung miteinander verbunden. In der Regel umfassen Verbundkörper, unabhängig davon ob gewickelt oder nicht, die Sequenz positive Elektrode / Separator / negative Elektrode. Häufig werden Verbundkörper als sogenannte Bizellen mit den möglichen Sequenzen negative Elektrode / Separator / positive Elektrode / Separator / negative Elektrode oder positive Elektrode / Separator / negative Elektrode / Separator / positive Elektrode hergestellt.

Für Anwendungen im Automobilbereich oder auch für andere Anwendungen mit hohem Energiebedarf werden zur Erzeugung hoher Spannungen häufig mehrere gewickelte elektrochemische Zellen zu einem Batteriemodul miteinander verschaltet. Abweichungen von einem Normalbetrieb bereits einer der Zellen können zu einer Schädigung des gesamten Moduls führen. Es ist daher wünschenswert, den Betrieb der Zellen zu überwachen, da mittels einer Überwachung problematische Zustände der Zellen rechtzeitig erkannt und entsprechende Maßnahmen eingeleitet werden können.

Es sind bereits verschiedene Ansätze bekannt, um eine Sensorik in elektrochemischen Zellen zu integrieren. So beschreibt beispielsweise die internationale Patentanmeldung WO 2013/120668 A1 eine Sensorvorrichtung für eine Zelle eines elektrischen Energiespeichers, wobei neben einer Referenzelektrode innerhalb des Gehäuses der Zelle weiterhin eine Einrichtung zum Erfassen von Sensordaten vorgesehen ist, wobei die Einrichtungan die Anode und die Kathode angeschlossen ist. Hiermit können beispielsweise Daten zur Temperatur und/oder dem Druck in der Zelle erfasst werden.

Die deutsche Offenlegungsschrift DE 10 2012 223 480 A1 beschreibt eine Zelle, die eine Vorrichtung zur Überwachung mindestens eines Parameters der Zelle aufweist, wobei diese Vorrichtung mindestens einen Sensor, beispielsweise einen chemischen Sensor oder einen Spannungssensor, umfasst. Die für den Betrieb der Überwachungsvorrichtung erforderliche Betriebsspannung wird von der Zelle abgegriffen.

Der vorliegenden Erfindung liegt die Aufgabe zugrunde, eine technische Lösung bereitzustellen, die es erlaubt, den Betrieb einzelner elektrochemischer Zellen in einem Batteriemodul zu überwachen. Die Lösung soll sich hierbei möglichst einfach in den Prozess der Fertigung der elektrochemischen Zellen integrieren lassen.

Diese Aufgabe wird durch die elektrochemische Zelle mit den Merkmalen des Anspruchs 1 gelöst. Bevorzugte Ausgestaltungen dieser Zelle ergeben sich aus den abhängigen Ansprüchen. Weiterhin wird diese Aufgabe durch ein Verfahren zur Herstellung einer derartigen Zelle gemäß dem weiteren unabhängigen Anspruch gelöst.

Die erfindungsgemäße elektrochemische Zelle zeichnet sich stets durch die folgenden Merkmale aus:
a. die Zelle umfasst mindestens eine bandförmige negative Elektrode,
b. die Zelle umfasst mindestens eine bandförmige positive Elektrode,
c. die mindestens eine negative Elektrode und die mindestens eine positive Elektrode bilden einen Verbund und sind dabei durch mindestens einen Separator voneinander getrennt,
d. derVerbund aus der mindestens einen negativen Elektrode, dem mindestens einen Separator und der mindestens einen positiven Elektrode ist um eine Wickelachse gewickelt und bildet einen Wickel,
e. der Wickel umfasst einen zentralen Hohlraum, durch den die Wickelachse verläuft,
f. die Zelle weist ein Gehäuse mit einer ersten und einerzweiten Stirnseite und einem ringförmigen Gehäusemantel auf, das einen Innenraum, in dem der Wickel angeordnet ist, dichtend umschließt.

Die besonderen kennzeichnenden Merkmale der Zelle lauten wie folgt:
g. In dem zentralen Hohlraum ist mindestens ein Sensormittel oder mindestens ein Teil eines Sensormittels angeordnet, das Zustandsänderungen des Wickels qualitativ und/oder quantitativ erfassen kann, und
h. an der ersten und/oder der zweiten Stirnseite befindet sich ein Anzeige- und/oder Kontaktmittel, das von dem mindestens einen Sensormittel erfasste Messwerte anzeigen und/oder über das diese Messwerte an eine Empfangs- und/oder Auswerteeinheit übertragen werden können.

Die erfindungsgemäße Zelle zeichnet sich also insbesondere dadurch aus, dass der zentrale Hohlraum des Wickels funktional genutzt wird, indem das mindestens eine Sensormittel oder der mindestens eine Teil des Sensormittels darin angeordnet werden. Mit Hilfe des oder der Sensormittel können Zustandsänderungen verschiedener Art des Wickels erfasst werden, wodurch je nach Ausführung der Sensormittel eine Zustandsüberwachung und/oder eine Diagnose der Zelle ermöglicht wird. Durch die Anordnung des oder der Sensormittel oder Teile des oder der Sensormittel in dem zentralen Hohlraum des Wickels wird eine besonders einfach zu realisierende und praktikable Lösung für die Ausstattung einer elektrochemischen Zelle mit Sensormitteln bereitgestellt.

Unter den erwähnten Zustandsänderungen werden vorliegend Eigenschaften der Zelle verstanden, die eine Bedeutung für die Funktion der Zelle haben. Hierbei spielen vor allem Druckänderungen, Temperaturänderungen und/oder Spannungsänderungen eine Rolle.

Prinzipiell eignet sich die hier beschriebene Anordnung der Sensormitteln bzw. Teile der Sensormittel sowohl für aufladbare (sekundäre) als auch für nicht aufladbare (primäre) Zellen. Da jedoch das Bedürfnis für eine Überwachungsfunktion bei primären Zellen in der Regel geringer ist und da der mit einer Sensorik verbundene Aufwand bei primären Zellen gegebenenfalls nicht in einem ausgeglichen Verhältnis zu seinem Nutzen steht, ist die Anordnung der Sensorik gemäß dem beschriebenen Konzept vor allem für sekundäre Zellen vorteilhaft. Bei der erfindungsgemäßen Zelle handelt es sich also bevorzugt um eine sekundäre elektrochemische Zelle.

Bei dem oder den Sensormitteln der erfindungsgemäßen Zelle kann es sich um verschiedene Arten von Sensoren bzw. Sensormitteln handeln. In besonders bevorzugten Ausgestaltungen ist mindestens eines der unmittelbar folgenden zusätzlichen Merkmale a. bis c. vorgesehen:
a. Das mindestens eine Sensormittel umfasst oder ist eine Referenzelektrode.
b. Das mindestens eine Sensormittel umfasst einen Temperatursensor oder ist ein Temperatursensor.
c. Das mindestens eine Sensormittel umfasst einen Drucksensor oder ist ein Drucksensor.

In besonders bevorzugten Ausgestaltungen umfasst das mindestens eine Sensormittel die Referenzelektrode und den Temperatursensor. Weiterhin kann auch eine Kombination von Referenzelektrode und Drucksensor bevorzugtsein. Weiterhin kann eine Kombination des Temperatursensors mit dem Drucksensor bevorzugt sein. In besonders bevorzugter Weise ist eine Kombination von Referenzelektrode, Temperatursensor und Drucksensor bevorzugt.

Darüber hinaus kann das mindestens eine Sensormittel auch andere Sensormittel umfassen, beispielsweise Gassensoren, insbesondere zur Detektion verschiedener chemischer Substanzen, die gegebenenfalls in der Zelle freigesetzt werden. Gassensoren können beispielsweise auf einem optischen Messprinzip oder auf anderen Messprinzipien beruhen. Weiterhin können auch andere Sensoren, beispielsweise andere optische Sensoren, eingesetzt werden.

Mittels der Referenzelektrode ist die Messung eines Elektrodenpotentials der Zelle möglich. Elektrodenpotentiale sind eine wichtige Messgröße zur Beurteilung des Zustands der Zelle, beispielsweise des Ladezustands. Insbesondere kann so die Potentialdifferenz zwischen der Referenzelektrode und der negativen Elektrode und/oder der Referenzelektrode und der positiven Elektrode erfasst werden.

Mit Hilfe des Temperatursensors kann die Temperatur innerhalb der Zelle erfasst und überwacht werden. Die Temperatur erlaubt ebenfalls Rückschlüsse auf den Zustand der Zelle. Insbesondere kann eine übermäßige Erwärmung (Kernüberhitzung) festgestellt werden, die sich sehr nachteilig auf die Funktionsfähigkeit der Zelle auswirken kann. Weiterhin kann mittels eines Temperatursensors auch eine zu niedrige Temperatur festgestellt werden, die beispielsweise für einen Ladevorgang unvorteilhaft ist. Insbesondere erlaubt ein Temperatursensor ein thermisches Management der Zelle.

Bei dem Temperatursensor kann es sich um eine optische Sensorik, z.B. um einen Infrarotsensor, handeln. Der Temperatursensor kann aber auch ein Thermoelement oder einen elektronischen Temperatursensor, der in Abhängigkeit der Temperatur seinen Widerstand ändert, umfassen.

Mittels des Drucksensors kann insbesondere der Zellinnendruck (Wickeldruck) erfasst werden, der ebenfalls Rückschlüsse auf den Zustand der Zelle zulässt. Ein ansteigender Innendruck innerhalb der Zelle findet kann auf eine Zersetzung des Elektrolyten hindeuten, die mit einer entsprechenden Ausgasung verbunden ist, so dass der Gasdruck ansteigt.

In Bezug auf die Referenzelektrode ist die Zelle in bevorzugten Ausgestaltungen insbesondere durch mindestens eines der unmittelbar folgenden zusätzlichen Merkmale a. und b. gekennzeichnet:
a. Die Referenzelektrode ist in dem zentralen Hohlraum angeordnet.
b. Das Sensormittel umfasst mindestens ein Verbindungsmittel, über das von der Referenzelektrode ermittelte Messwerte an das Anzeige- und/oder Kontaktmittel übermittelt werden können.

In bevorzugten Ausgestaltungen sind hierbei die unmittelbar vorstehenden Merkmale a. und b. gemeinsam verwirklicht.

In einer besonders bevorzugten Ausgestaltung ist die Zelle in Bezug auf die Referenzelektrode durch das unmittelbar folgende Merkmal a. gekennzeichnet:
a. Die Referenzelektrode umfasst Lithium oder ein lithiumhaltiges Material und das mindestens eine Verbindungsmittel ist ein elektrischer Leiter.

Der elektrische Leiter steht in elektrischem Kontakt mit dem Lithium oder dem lithiumhaltigen Material, bevorzugt in unmittelbarem Kontakt.

Die Verwendung von Lithium oder einem lithiumhaltigen Material für die Referenzelektrode ist natürlich insbesondere dann vorteilhaft, wenn die erfindungsgemäße Zelle eine Lithium-Ionen-Zelle ist. Wie bereits erläutert, kann das definierte Potential von Lithium oder dem lithiumhaltigen Material als Referenz zur Messung einer Potentialdifferenz genutzt werden.

Weiterhin kann das Lithium oder das lithiumhaltige Material zugleich aber auch als Lithium-Depot dienen. Lithium-Ionen-Zellen sind auf die Verfügbarkeit von freiem Lithium bzw. Lithiumionen angewiesen, wobei der Gehalt an verfügbarem freiem Lithium (mobiles Lithium) im Laufe der Betriebsdauer der Zelle abnimmt. Durch eine zusätzliche Lithium-Quelle innerhalb einer Zelle kann daher die Lebensdauer einer Lithium-Ionen-Zelle verlängert werden. So ist es möglich, den Elektroden der Zelle bei Bedarf Lithium aus dem Depot zuzuführen oder aber zur Vermeidung von Lithium-Plating überschüssiges Lithium aus den Elektroden abzuführen. Hierzu kann die als Lithium-Depot dienende Elektrode, beispielsweise über den elektrischen Leiter, der auch als Verbindungsmittel dienen kann, gegen die negative oder gegen die positive Elektrode der Lithium-Ionen-Zelle geschaltet werden. Überschüssiges Lithium kann bei Bedarf dem Lithium-Depot zugeführt und dort abgelagert werden. Für diese Anwendungsfälle können Mittel vorgesehen sein, die ein separates Monitoring der Einzelpotentiale von Anode und Kathode in der Zelle und/oder eine externe Überwachung der Zellbalance über elektrochemische Analysen wie DVA (differential voltage analysis) ermöglichen.

Ein Ende des elektrischen Leiters steht bevorzugt mit der Referenzelektrode bzw. dem Lithium oder dem lithiumhaltigen Material der Referenzelektrode und ein weiteres Ende des elektrischen Leiters mit dem Anzeige- und/oder Kontaktmittel in elektrischem Kontakt. Die Referenzelektrode bildet neben dem positiven Pol und dem negativen Pol der Zelle einen dritten Pol der Zelle.

Der elektrische Leiter und die damit verbundene Referenzelektrode bzw. das Lithium-Depot müssen als dritter Pol gegen die beiden anderen Pole der Zelle, also die positive und die negative Elektrode sowie damit elektrisch gekoppelte Komponenten der Zelle, elektrisch isoliert sein.

Bei dem Lithium oder dem lithiumhaltigen Material der Referenzelektrode bzw. des Lithium-Depots kann es sich beispielsweise um metallisches Lithium, ein Lithium-Metall-Oxid, ein Lithium-Metall-Phosphat oder andere, dem Fachmann geläufige Materialien handeln. Zweckmäßigerweise stehen diese Materialien in Kontakt mit einem Elektrolyten. Die Ausführung der Referenzelektrode mit Lithium bzw. mit einem lithiumhaltigen Material ist insbesondere gut geeignet, um eine Lithium-Plattierung rechtzeitig zu erkennen und gegebenenfalls zu verhindern.

In Bezug auf den Temperatursensor ist die Zelle vorteilhafterweise durch mindestens eines der unmittelbarfolgenden zusätzlichen Merkmale a. und b. gekennzeichnet:
a. Der Temperatursensor ist in dem zentralen Hohlraum angeordnet.
b. Das Sensormittel umfasst mindestens ein Verbindungsmittel, über das von dem Temperatursensor ermittelte Messwerte an das Anzeige- und/oder Kontaktmittel übermittelt werden können.

Vorteilhafterweise sind die unmittelbar vorstehenden Merkmale a. und b. gemeinsam verwirklicht.

Durch die Anordnung des Temperatursensors in dem zentralen Hohlraum des Wickels ist es möglich, dass die Temperatur im Zentrum der Zelle erfasst wird, so dass, beispielsweise im Vergleich mitTemperatursensoren am Gehäuse eines Zelle, besonders genaue und aussagekräftige Informationen über die Temperatur der Zelle gewonnen werden können.

Über das Verbindungsmittel können die mittels des Temperatursensors erfassbaren Sensordaten an das Anzeige- und/oder Kontaktmittel übertragen werden, so dass durch entsprechende Weiterleitung und/oder Auswertung der Daten ein Temperaturmanagement der Zelle möglich ist.

In besonders bevorzugten Ausgestaltungen in Bezug auf den Temperatursensor ist die Zelle durch das folgende Merkmal gekennzeichnet:
a. Der Temperatursensor ist ein temperaturabhängiger Widerstand oder umfasst einen temperaturabhängigen Widerstand und das mindestens eine Verbindungsmittel umfasst einen elektrischen Leiter.

Die Ausgestaltung des Temperatursensors als temperaturabhängiger Widerstand (beispielsweise ein NTC-Element (*Negative Temperature Coefficient Thermistor* - Heißleiter) oder ein PTC-Element (*Positive Temperature Coefficient Thermistor-* Kaltleiter) erlaubt eine besonders kostengünstige und dabei praktikable Realisierung eines Temperatursensors in der Zelle. NTC- und PTC-Elemente lassen sich in miniaturisierter Weise herstellen und eignen sich daher in besonderer Weise als Temperatursensormittel in dererfindungsgemäßen Zelle. Zweckmäßigerweise istdertemperaturabhängige Widerstand über elektrische Leiter, die den Temperatursensor mit dem Anzeige- und/oder Kontaktmittel verbunden.

Der axiale Hohlraum weist eine Länge auf, die in der Regel 85 bis 99 %, insbesondere 90 bis 99 %, des Abstandes der Stirnseiten des Zellgehäuses beträgt. Bevorzugt ist der Temperatursensor in einem zentralen Bereich des Hohlraums angeordnet, insbesondere in dem mittleren Drittel des Hohlraums. Durch diese Maßnahme wird erreicht, dass die erfassten Temperaturwerte die Temperatur an einem zentralen Punkt im Inneren des Wickels widerspiegeln.

In besonders bevorzugten Ausgestaltungen ist die erfindungsgemäße Zelle mit dem unmittelbar folgenden zusätzlichen Merkmal ausgestattet:
a. In dem zentralen Hohlraum des Wickels istein länglicherTrägerkörper, insbesondere ein länglicher Hohlkörper, angeordnet.

Mit dem länglichen Trägerkörper und insbesondere mit dem länglichen Hohlkörper kann in besonders vorteilhafter Weise eine Einbringung der oder des Sensormittels in das Innere der erfindungsgemäßen Zelle realisiert werden. Der längliche Trägerkörper übernimmt dabei gewissermaßen die Funktion eines Trägers für die Sensoren und/oder das mindestens eine Sensormittel.

Bei dem länglichen Hohlkörper kann es sich insbesondere um eine langgestreckte Röhre handeln, die bei der Fertigung der erfindungsgemäßen Zelle in den zentralen Hohlraum des Wickels eingeschoben wird oder auf der die Elektroden und der Separator aufgewickelt werden. Eine solche, oft als Wickelkern bezeichnete Röhre kann unter zyklischer Beanspruchung der Zellen eine Deformation des Wickels in den zentralen Hohlraum hinein verhindern und/oder unter Abuse-Bedingungen ein Kollabieren des Wickels vermeiden. So kann beispielsweise ein sich aufbauender Gasdruck über eine Berstmembran effizient abgebaut werden.

Der längliche Hohlkörper ist bevorzugt zumindest in einem Teilbereich, gegebenenfalls auch vollständig, als Hohlzylinder ausgebildet.

Der längliche Hohlkörper kann beispielsweise einen Außendurchmesser im Bereich zwischen 1 bis 10 mm, insbesondere zwischen 2 und 7 mm, vorzugsweise zwischen 2 und 5 mm aufweisen. Die Wandstärke des länglichen Hohlkörpers kann beispielsweise in einem Bereich zwischen 0,1 bis 1 mm liegen, beispielsweise bei 0,5 mm. So kann beispielsweise ein länglicher Hohlkörper mit einem Au-ßendurchmesser von 3 mm einen Innendurchmesser von 2 mm aufweisen. In anderen Ausgestaltung können die Abmessungen gegebenenfalls etwas größer sein, z. B. ein Außendurchmesser von 5 mm und ein Innendurchmesser von beispielsweise 4 mm.

Gemäß einer besonders bevorzugten Ausgestaltung der erfindungsgemäßen Zelle wird der längliche Hohlkörper, insbesondere in einer Ausgestaltung als Wickelkern, genutzt, um in besonders vorteilhafter Weise das mindestens eine Sensormittel oder Teile desselben in den zentralen Hohlraum des Wickels einzubringen. So kann beispielsweise der längliche Hohlkörper als Trägerkörper genutzt werden, um einen Temperatursensor und/oder eine Referenzelektrode in dem zentralen Hohlraum zu platzieren.

In Bezug auf den länglichen Trägerkörper und insbesondere den länglichen Hohlkörper, auch in seiner Ausgestaltung als Wickelkern, ist die erfindungsgemäße Zelle in bevorzugten Ausgestaltungen durch mindestens eines der folgenden zusätzlichen Merkmale gekennzeichnet:
a. Der längliche Trägerkörper besteht zumindest teilweise aus Glas und/oder Keramik und/oder Metall und/oder Kunststoff.
b. Der längliche Trägerkörper ist zumindest in Teilbereichen oder vollständig elektrisch leitend ausgebildet.
c. Der längliche Trägerkörper ist mit elektrisch leitfähigem Material zumindest teilweise beschichtet.
d. Der längliche Trägerkörper ist elektrisch von dem Gehäuse und/oder mindestens einer der Elektroden entkoppelt.
e. Der längliche Trägerkörper ist mit mindestens einer der Stirnseiten des Gehäuses dichtend verbunden.

Allgemein ist es vorteilhaft, wenn der längliche Trägerkörper aus einem elektrolytstabilen Material oder aus elektrolytstabilen Materialien wie Glas oder Edelstahl oder einem elektrolytstabilen Kunststoff wie Teflon gefertigt ist. Durch das elektrolytstabile Material des Trägerkörpers wird eine chemische Wechselwirkung des Elektrolyten mit dem Trägerkörpers vermieden.

In besonders vorteilhafter Weise ist der längliche Trägerkörper gemäß dem vorstehenden Merkmal b. elektrisch leitend, wodurch eine elektrische Kontaktierung der oderdes Sensormittels im Inneren des zentralen Hohlraums des Wickels mit dem stirnseitig angeordneten Anzeige- und/oder Kontaktmittel ohne zusätzliche elektrische Leiter realisiert werden kann. Hierfür kann der längliche Trägerkörper insbesondere aus Metall gemäß dem vorstehenden Merkmal a. gefertigt sein, beispielsweise aus Kupfer, Nickel, Edelstahl, Aluminium, Edelstahl, vernickeltem Stahl oder anderen Legierungen. In dieser Ausführungsform kann der Trägerkörper beispielsweise als elektrischer Leiter dienen, der die oben beschriebene Referenzelektrode bzw. das Lithium-Depot und/oder den Temperatursensor mit dem Anzeige- und/oder Kontaktmittel verbindet. In dieser Ausgestaltung kann beispielsweise ein Ende des länglichen Trägerkörpers, das in den zentralen Hohlraum des Wickels hineinragt, mit dem Material für die Referenzelektrode, beispielsweise dem metallischen Lithium oder dem lithiumhaltigen Material, beschichtet sein. Die elektrische Anbindung dieser Referenzelektrode kann dann über den elektrisch leitenden Trägerkörper erfolgen. In der Regel ist es dann allerdings erforderlich, den Trägerkörper gegenüber dem Zellgehäuse elektrisch zu isolieren, also gemäß dem unmittelbar vorstehenden Merkmal d. elektrisch von dem Gehäuse und/oder mindestens einer der Elektroden zu entkoppeln.

In anderen Ausführungen kann der längliche Trägerkörper gemäß Merkmal c. zur Realisierung einer elektrischen Leitfähigkeit auch mit einem elektrisch leitfähigen Material zumindest teilweise beschichtet sein, insbesondere, wenn der längliche Trägerkörper aus Glas und/oder Keramik gemäß dem vorstehenden Merkmal a. gefertigt ist. Auch auf diese Weise kann eine elektrische Anbindung der Sensormittel, die sich in oder an dem Trägerkörper befinden, ohne zusätzlichen elektrischen Leiter realisiert werden. Gegebenenfalls ist dann allerdings die Beschichtung oder der Trägerkörper samt Beschichtung gegenüber dem Zellgehäuse elektrisch zu isolieren.

Besonders vorteilhaft ist die elektrische Entkopplung des länglichen Trägerkörpers von dem Gehäuse und/oder mindestens einer, vorzugsweise beiden Elektroden der Zelle gemäß dem unmittelbar vorstehenden Merkmal d., vorzugsweise in Kombination mit dem unmittelbar vorstehenden Merkmal b. oder c.. Durch diese Maßnahme wird erreicht, dass die in der Zelle angeordnete Sensorik unabhängig von dem Spannungszustand und der Ladung der Zelle betrieben wird, so dass es beispielsweise nicht zu einer unbeabsichtigten Entladung der Zelle durch die Sensorik kommen kann.

Allgemein ist es vorteilhaft, wenn das vorliegend beschriebene mindestens eine Sensormittel mit einem eigenen Stromkreis betrieben wird, so dass die Speicher- und Ladungskapazitäten der Zelle selbst hiervon nicht beeinflusst werden.

Im Falle der Referenzelektrode als Sensormittel ist es zwingend vorgesehen, dass die Referenzelektrode, gegebenenfalls zusammen mit dem länglichen Trägerkörper, elektrisch von dem Gehäuse und den Elektroden entkoppelt ist.

Durch die dichtende Verbindung des länglichen Trägerkörpers mit mindestens einer der Stirnseiten des Gehäuses gemäß dem vorstehenden Merkmal e. wird eine besonders einfach zu realisierende Fertigung der erfindungsgemäßen Zelle ermöglicht, wobei das mindestens eine Sensormittel zusammen mit dem länglichen Trägerkörper während der Fertigung in das Innere des Wickels eingeschoben werden kann und die erforderliche Abdichtung des Gehäuses der Zelle durch die dichtende Verbindung des länglichen Trägerkörpers mit dem Gehäuse bzw. mit der Stirnseite des Gehäuses gewährleistet wird. Die dichtende Verbindung kann beispielsweise durch Einfügung eines Dichtmittels zwischen den Trägerkörper und das Gehäuse oder eine klebende, verschweißende, verlötende oder anderweitige Verbindung realisiert werden.

Insbesondere im Falle des Temperatursensors und/oder des Drucksensors als Sensormittel kann der längliche Trägerkörper auch elektrisch nichtleitend, beispielsweise also aus Glas und/oder Keramik gefertigt sein. In diesen Ausgestaltungen kann dann etwa der im Inneren des Wickels gegebenenfalls angeordnete Temperatursensor mit Hilfe von geeigneten elektrischen Leitern, die im Inneren oder entlang der Wand des länglichen Hohlkörpers zu dem Anzeige- und/oder Kontaktmittel geführt werden, elektrisch angebunden sein.

Im Fall des Temperatursensors kann es allerdings auch zweckmäßig sein, wenn über den länglichen Trägerkörper eine gute thermische Anbindung an das übrige Innere des Wickels gegeben ist, insbesondere sollten hierfür Materialien für den länglichen Trägerkörper verwendet werden, die einen guten Temperaturaustausch ermöglichen.

Der längliche Trägerkörper kann prinzipiell die gesamte Länge deszentralen Hohlraums des Wickels einnehmen. Es kann jedoch auch vorgesehen sein, dass der längliche Trägerkörper nur einen Teil der Länge des zentralen Hohlraums einnimmt, beispielsweise eine Länge im Bereich zwischen 50 und 80 % der Gesamtlänge des Wickels.

In einer weiteren besonders bevorzugten Ausgestaltung der erfindungsgemäßen Zelle ist die Zelle durch mindestens eines der unmittelbar folgenden zusätzlichen Merkmale a. und b. gekennzeichnet:
a. Der längliche Trägerkörper ist zur Temperierung der Zelle eingerichtet.
b. Der längliche Trägerkörper steht mit einer externen Temperierungseinrichtung in Kontakt.

In bevorzugter Weise sind die unmittelbar vorstehenden Merkmale a. und b. in Kombination realisiert.

In dieser Ausführungsform wird der längliche Trägerkörper als Kühl- und/oder Heizkörper genutzt, so dass in besonders vorteilhafter Weise ein Temperaturmanagement der Zelle möglich ist. Eine Heizbarkeit kann beispielsweise bei niedrigen Außentemperaturen sehr sinnvoll sein, da insbesondere für einen Ladevorgang der Zelle eine gewisse Mindesttemperatur erforderlich ist. Eine Kühlung kann insbesondere in solchen Fällen vorteilhaft sein, wenn eine übermäßige Erwärmung der Zelle stattfindet, die die weitere Funktion der Zelle negativ beeinflussen könnte. Bevorzugt besteht der Trägerkörper in dieser Ausführungsform zumindest teilweise aus Metall.

Prinzipiell ist eine Temperierung der Zelle mit oder gegebenenfalls auch ohne externe Temperierungseinrichtung auch ohne den in den zentralen Hohlkörper des Wickels eingebrachten länglichen Trägerkörper möglich. Der Einsatz eines länglichen Trägerkörpers im Inneren des Wickels ist für die Temperierung jedoch besonders vorteilhaft, da durch den länglichen Trägerkörper eine Kühlung unmittelbar im Zentrum des Wickels erfolgen kann. Die Kühlung kann eine aktive oder eine passive sein. Bei einer aktiven Kühlung sollte der Trägerkörper dazu ausgebildet sein, von einem Kühlmittel durchflossen zu werden. Beispielsweise eignet sich für den länglichen Trägerkörper und insbesondere den länglichen Hohlkörper in diesem Zusammenhang ein Metallröhrchen, das beispielsweise mit einer Wasserkühlung als externer Temperierungseinrichtung zur Temperierung der Zelle gekoppelt werden kann. Dieses Röhrchen bildet dabei gewissermaßen eine Verlängerung eines von außen angreifenden Kühlsystems in das Innere der Zelle hinein.

In Bezug auf den oben bereits beschriebenen Drucksensor ist die Zelle in bevorzugten Ausgestaltungen durch mindestens eines der unmittelbar folgenden Merkmale a. bis c. gekennzeichnet:
a. Der Drucksensor ist an einer der Stirnseiten des Gehäuses angeordnet.
b. Das Sensormittel umfasst einen in dem zentralen Hohlraum hineinragenden Hohlkörper, über den dervon dem Gehäuse umschlossene Innenraum mit dem Drucksensor in kommunizierender Verbindung steht.
c. Der Drucksensor ist ein Piezo-Drucksensor.

In besonders bevorzugten Ausgestaltungen sind die unmittelbar vorstehenden Merkmale a. und b. in Kombination miteinander verwirklicht. Besonders bevorzugt ist eine Kombination der unmittelbar vorstehenden Merkmale a., b. und c.

Bei dem Hohlkörper gemäß dem vorstehenden Merkmal b. handelt es sich bevorzugt um die oben beschriebene bevorzugte Ausführungsform des Trägerkörpers. Dieser Hohlköper ist vorliegend bevorzugt also ein in dem zentralen Hohlraum angeordnetes Teil eines Sensormittels, nämlich des Drucksensors. Der Hohlkörper kann genutzt werden, um Druckänderungen im Inneren des Hohlraums an den stirnseitig positionierten Drucksensor zu kommunizieren.

Durch die kommunizierende Verbindung des in den zentralen Hohlraum hineinragenden Hohlkörpers mit dem an einer der Stirnseiten des Gehäuses angeordneten Drucksensor kann mittels des Drucksensors der Druck im Inneren des Wickels erfasst werden. Ein ansteigender Innendruck, der durch einen sich aufbauenden Gasdruck innerhalb der Zelle zustande kommen kann, ist mit der Gefahr eines Zerreißens oder Berstens der Zelle verbunden. Insofern stellt eine Drucküberwachung eine wichtige Überwachungsgröße dar, um gegebenenfalls eine Druckentlastung oder Ähnliches zur Vermeidung von Gefährdungen einleiten zu können.

Bei dem Piezo-Drucksensor, der in bevorzugten Ausgestaltungen als Drucksensor eingesetzt werden kann, handelt es sich um ein kostengünstiges Bauteil, das sich in besonders bevorzugter Weise für die erfindungsgemäße Zelle eignet.

In einer möglichen Weiterbildung ist die Zelle in Bezug auf den Drucksensor durch mindestens eines der unmittelbar folgenden Merkmale a. bis c. gekennzeichnet:
a. Der Drucksensor begrenzt den Hohlkörper.
b. Der Hohlkörper ist ein länglicher Hohlkörper, dessen eines Ende von dem Drucksensor begrenzt wird.
c. Der Hohlkörper weist mindestens eine Öffnung zum druckausgleichenden Kontakt mit dem Wickel auf.

In bevorzugten Ausgestaltungen sind die unmittelbar vorstehenden Merkmale a. und b. und insbesondere die Merkmale a., b. und c. gemeinsam verwirklicht.

Durch die Begrenzung des Hohlkörpers, der sich im zentralen Hohlraum des Wickels befindet, durch den Drucksensor wird in besonders einfacher und praktikabler Weise die kommunizierende Verbindung zwischen dem Innenraum des Hohlkörpers und dem Drucksensor realisiert.

Für den Hohlkörper eignet sich in besonderer Weise die Form einer langgestreckten Röhre, die in den zentralen Hohlraum des Wickels eingeschoben werden kann.

Es ist in dieser Ausführungsform vorteilhaft, wenn der Hohlkörper mindestens eine Öffnung aufweist, über die sein Inneres mit dem Innenraum des Zellgehäuses verbunden ist und über die ein Druckausgleich zwischen seinem Inneren und dem von dem Zellgehäuses umschlossenen Raum, in dem der Wickel angeordnet ist, erfolgen kann. Die Öffnung oder die Öffnungen in dem Hohlkörper können dabei im Prinzip in beliebiger Weise gestaltet sein. Beispielsweise kann das Ende des Hohlkörpers, beispielsweise das Ende der langgestreckten Röhre, das in das Innere der Zelle bzw. in das Innere des Wickels ragt, offen gestaltet sein. Zusätzlich oder in alternativen Ausgestaltungen können ein oder mehrere Löcher oder andere Öffnungen in der Wandung des Hohlkörpers vorgesehen sein. Hierbei kann es sich beispielsweise um Mikrolöcher handeln, wobei die gesamte Fläche der Löcher beispielsweise im Bereich zwischen 0,1 bis 10 mm², beispielsweise ungefähr 0,5 mm², betragen kann. Maßgeblich für die Ausgestaltung der mindestens einen Öffnung in dem Hohlkörper ist, dass ein möglichst unmittelbarer Druckausgleich zwischen dem Bereich des Wickels und dem Inneren des Hohlkörpers stattfindet.

In einigen weiteren Ausführungsformen ohne Drucksensor ist das Innere des Hohlkörpers allerdings bevorzugt druckdicht isoliert und nicht über Öffnungen und /oder Durchbrechungen mit sonstigen Hohlräumen in der Zelle verbunden.

Bei dem Anzeige- und/oder Kontaktmittel kann es sich im einfachsten Fall um einen elektrischen Kontakt handeln, der von außerhalb des Zellgehäuses abgegriffen werden kann und der elektrisch mit dem mindestens einen Sensormittel, z.B. der Referenzelektrode, verbunden ist.

In einer besonders bevorzugten Ausgestaltung der erfindungsgemäßen Zelle ist die Zelle durch eines der unmittelbar folgenden zusätzlichen Merkmale a. und b. gekennzeichnet:
a. Das Anzeige- und/oder Kontaktmittel umfasst eine PCB-Platine.
b. Das Anzeige- und/oder Kontaktmittel ist eine PCB-Platine.
c. Das Anzeige- und/oder Kontaktmittel ist auf einer PCB-Platine angeordnet.

Bei einer PCB-Platine (*Printed Circuit Board*) handelt es sich um eine Leiterplatte, die als Träger für elektronische Bauteile fungiert. Eine derartige Leiterplatte besteht im Allgemeinen aus elektrisch isolierendem Material, das mit Leiterbahnen versehen ist, die beispielsweise aus dünnen Kupferschichten geätzt sind. Bei dem elektrisch isolierenden Material kann es sich beispielsweise um einen Glasfaserverbund, z. B. auf der Basis von Epoxidharz, handeln.

Eine derartige PCB-Platine bildet oder umfasst in besonders bevorzugten Ausgestaltungen das Anzeige- und/oder Kontaktmittel der erfindungsgemäßen Zelle oder ist Teil des Anzeige- und/oder Kontaktmittels. In diesen Ausgestaltungen ist das oder sind die Sensormittel mit der PCB-Platine direkt oder indirekt kontaktiert. Die PCB-Platine kann hierbei einen Teil des Gehäuses, insbesondere die Stirnseite oder einen Teil der Stirnseite des Gehäuses der Zelle bilden oder stirnseitig an dem Gehäuse angebracht sein.

Das Anzeige- und/oder Kontaktmittel kann auch der erwähnte, von außerhalb des Zellgehäuses abgreifbare Kontakt sein, wobei der Kontakt auf der PCB-Platine angeordnet ist.

Über eine Verschaltung des mindestens einen Sensormittels mit der PCB-Platine kann in einfacher Weise eine Anbindung an weitere externe Einheiten, insbesondere an eine externe Auswerteeinheit und/oder an ein externes Managementsystem der Zelle, in einfacher Weise realisiert werden.

Prinzipiell sind alternativ zu einer PCB-Platine auch andere Kontakt- und/oder Anzeigemittel zur Anzeige und/oder Übertragung der mittels der Sensormittel erfassbaren Messwerte möglich.

In besonders bevorzugten Ausgestaltungen der Zelle ist die Zelle in Bezug auf die PCB-Platine durch mindestens eines der unmittelbar folgenden zusätzlichen Merkmale a. und b. gekennzeichnet:
a. Die PCB-Platine weist eine zentrale Aussparung oder Durchbrechung zur Aufnahme mindestens eines Sensormittels und/oder eines länglichen Trägerkörpers gemäß der obigen Beschreibung auf.
b. Die PCB-Platine ist dichtend mit einem umgebenden Bereich der Stirnseite oder mit dem umgebenden Gehäusemantel verbunden.

In besonders bevorzugten Ausgestaltungen sind die unmittelbar vorstehenden Merkmale a. und b. miteinander kombiniert.

Bei einem klassischen bzw. herkömmlichen Aufbau einer Zelle in Form einer zylindrischen Rundzelle oder einer Knopfzelle ist in der Regel an einer Stirnseite des Zellgehäuses ein Verschluss mittels eines Deckels vorgesehen. Diese Seite wird nachstehend als Verschlussseite bezeichnet. Die andere Stirnseite bildet den Gehäuseboden.

Es ist bevorzugt, dass das Anzeige- und/oder Kontaktmittel, insbesondere die PCB-Platine, an dem Gehäuseboden angeordnet ist oder einen Teil des Gehäusebodens bildet, insbesondere in diesen integriert ist.

Es kann entsprechend auch vorteilhaft sein, das mindestens eine Sensormittel und gegebenenfalls den länglichen Trägerkörper über den Boden des Gehäuses in das Innere bzw. den zentralen Hohlkörper des Wickels einzubringen und über bodenseitige Kontakt- und/oder Anzeigemittel nach au-ßen anzubinden, wobei diese Anbindung vorzugsweise über die beschriebene PCB-Platine auf der bodenseitigen Stirnseite erfolgen kann.

Grundsätzlich ist allerdings auch eine Integration des mindestens einen Sensormittels und/oder des Anzeige- und/oder Kontaktmittels an oder in die Verschlussseite möglich.

In besonders bevorzugter Weise ist die PCB-Platine mit einer Aussparung oder Durchbrechung versehen, in die das mindestens eine Sensormittel und/oder das mindestens eine Teil des Sensormittels und/oder der längliche Trägerkörper eingebracht und aufgenommen werden kann. In diesen Fällen ist zweckmäßigerweise eine Abdichtung dieser zentralen Aussparung oder Durchbrechung und ebenfalls eine Abdichtung der PCB-Platine gegenüber dem umgebenden Bereich der Stirnseite oder dem angrenzenden Gehäusemantel vorgesehen, um die Funktion der Zelle zu gewährleisten, die ein dichtes Gehäuse voraussetzt.

In besonders bevorzugten Ausgestaltungen ist die erfindungsgemäße Zelle durch mindestens eines der unmittelbar folgenden Merkmale gekennzeichnet:
a. Die Zelle ist eine Lithium-Ionen-Zelle.
b. Die Zelle ist eine zylindrischen Rundzelle.
c. Die Zelle ist eine Knopfzelle.

Hierbei ist insbesondere eine Kombination der unmittelbar vorstehenden Merkmale a. und b. oder eine Kombination der unmittelbar vorstehenden Merkmale a. und c. besonders bevorzugt.

Erfindungsgemäße Zellen sind besonders bevorzugt Lithium-Ionen-Zellen, insbesondere sekundäre Lithium-Ionen-Zellen. Lithium-Ionen-Zellen zeichnen sich durch besonders hohe Energiedichten aus und sind daher für verschiedene Anwendungen mit hohem Energiebedarf, beispielsweise im Automobilbereich, mit besonderem Vorteil einsetzbar. Ungeachtet dessen kann es sich bei der erfindungsgemäßen Zelle auch um ein Zelle auf anderer Basis handeln, beispielsweise um eine Nickel-Metallhydrid-Zelle.

Allgemein werden die Elektroden von Lithium-Ionen-Zellen üblicherweise von Kompositelektroden gebildet, die in der Regel jeweils einen elektrisch leitenden Stromkollektor sowie elektrochemisch aktive Komponenten (oft auch als Aktivmaterialien bezeichnet) und elektrochemisch inaktive Komponenten umfassen. Dies ist auch vorliegend bevorzugt.

Die Stromkollektoren dienen dazu, die elektrochemisch aktiven Komponenten möglichst großflächig elektrisch zu kontaktieren. Sie bestehen üblicherweise aus bandförmigen, flächigen Metallsubstraten, beispielsweise aus Metallfolien. Sie können auch strukturiert vorliegen, beispielsweise gelocht oder gestreckt, oder sie können aus einem Metallschaum oder aus einem Metallnetz oder einem Metallgitter oder einem metallisierten Vlies gebildet sein. Der Stromkollektor der negativen Elektrode kann beispielsweise aus Metallen wie Kupfer oder Nickel gebildet sein und/oder aus einer elektrisch leitfähigen Folie gebildet sein. Für den Stromkollektor der positiven Elektrode kommen als Grundmaterialien beispielsweise Aluminium oder Titan in Frage.

In den oben genannten Fällen, in denen der Zelle bei Bedarf Lithium aus einem Lithium-Depot zugeführt oder aber zur vermeidung von Lithium-Plating überschüssiges Lithium aus den Elektroden abgeführt wird, ist es bevorzugt, dass die Stromkollektoren durchlässig für Lithiumionen sind. Hierzu können die Stromkollektoren beispielsweise Durchbrechungen aufweisen oder es können als Stromkollektoren metallische oder metallisierte Vliese oder offenporige Schäume verwendet werden, insbesondere aber auch gelochte oder auf sonstige Weise mit Durchbrechungen strukturierte Folien.

Als Aktivmaterialien kommen für die Elektroden der sekundären Lithium-Ionen-Zellen sämtliche Materialien in Frage, die Lithiumionen aufnehmen und wieder abgeben können. So können für die negative Elektrode insbesondere Materialien auf Kohlenstoffbasis wie graphitischer Kohlenstoff oder zur Interkalation von Lithium befähigte nicht-graphitische Kohlenstoffmaterialien eingesetzt werden. Auch Lithiumtitanat (Li₄Ti₅O₁₂) ist als Aktivmaterial geeignet. Weiterhin können auch metallische und halbmetallische Materialien, die mit Lithium legierbar sind, zum Einsatz kommen. So sind beispielsweise die Elemente Zinn, Antimon und Silizium in der Lage, mit Lithium intermetallische Phasen zu bilden. Insbesondere können die kohlenstoffbasierten Aktivmaterialien mit den metallischen und/oder halbmetallischen Materialien auch kombiniert werden.

Für die positive Elektrode der sekundären Lithium-Ionen-Zellen kommen beispielsweise Lithium-Metalloxid-Verbindungen und Lithium-Metallphosphat-Verbindungen wie LiCoO₂ und LiFePO₄ in Frage. Weiterhin gut geeignet sind insbesondere Lithiumnickelmangancobaltoxid (NMC) mit der Summenformel LiNiₓMn_{y}Co_{z}O₂ (wobei x+y+z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x+ y+ z typischerweise 1 ist). Auch Mischungen der genannten Materialien können eingesetzt werden.

Als elektrochemisch inaktive Komponenten sind an erster Stelle Elektrodenbinder und Leitmittel zu nennen. Die Elektrodenbinder gewährleisten die mechanische Stabilität der Elektroden und sorgen für die Kontaktierung der Partikel aus elektrochemisch aktivem Material untereinander sowie zum Stromkollektor. Übliche Elektrodenbinder basieren beispielsweise auf Polyvinylidenfluorid, Polyacrylat oder Carboxymethylcellulose. Leitmittel wie Ruß dienen dazu, die elektrische Leitfähigkeit der Elektroden zu erhöhen.

Als Separatoren kommen für die Lithium-Ionen-Zellen insbesondere poröse Kunststofffolien in Frage, beispielsweise aus einem Polyolefin oder aus einem Polyetherketon. Auch Vliese und Gewebe aus diesen Materialien können zum Einsatz kommen.

Als ionenleitenden Elektrolyten können die Lithium-Ionen-Zellen beispielsweise eine Mischung organischer Carbonate, in der ein Lithiumsalz gelöst ist, enthalten. Hierfür kommt im Grunde jedes Lithiumsalz in Frage, das aus dem Stand der Technik für Lithium-Ionen-Zellen bekannt ist. Ein prominentes Beispiel hierfür ist Lithiumhexafluorophosphat (LiPF6). Bevorzugt sind die Elektroden und Separatoren der Lithium-Ionen-Zellen mit dem Elektrolyten getränkt.

Allgemein eignetsich die beschriebene Integration einerSensorikfür verschiedene Arten von Zellen, sofern deren Anode und Kathode in Form eines Wickels mit einem zentralen Hohlraum angeordnet sind.

Gemäß dem vorstehenden Merkmal b. handelt es sich in besonders bevorzugten Ausführungsformen der erfindungsgemäßen Zelle bei der Zelle um eine zylindrische Rundzelle.

Zylindrische Rundzellen weisen in Abgrenzung zu Knopfzellen eine Höhe auf, die größer als ihr Durchmesser ist. Sie eignen sich zur Versorgung moderner Metering-, Sicherheits- und Automotiveapplikationen wie z.B. Strom-, Wasser-, Gaszähler, Heizkostenverbrauchsmessgeräte, medizinische Pipetten, Sensoren und Alarmsysteme, Hausalarmsysteme, Sensoren und Sensor-Netzwerke, Backupbatterien für Diebstahlschutzsysteme im Automobilbau mit elektrischer Energie.

Bevorzugt liegt die Höhe der Rundzellen im Bereich von 15 mm bis 150 mm. Der Durchmesser der zylindrischen Rundzellen liegt bevorzugt im Bereich von 10 mm bis 50 mm. Innerhalb dieser Bereiche sind Formfaktoren von beispielsweise 18 x 65 (Durchmesser mal Höhe in mm) oder 21 x 70 (Durchmesser mal Höhe in mm) besonders bevorzugt. Zylindrische Rundzellen mit diesen Formfaktoren eignen sich insbesondere zur Stromversorgung elektrischer Antriebe von Kraftfahrzeugen und Werkzeugen.

Die Nennkapazität deralszylindrische Rundzelle ausgebildeten erfindungsgemäßen Zelle beträgt in einer Ausführungsform als Lithium-Ionen-Zelle in der Regel bis zu 6000 mAh. Mit dem Formfaktor von 21 x 70 hat die Zelle in einer Ausführungsform als Lithium-lonen-Zelle bevorzugt eine Nennkapazität im Bereich von 2000 mAh bis 5000 mAh, besonders bevorzugt im Bereich von 3000 bis 4500 mAh.

In der Europäischen Union sind Herstellerangaben zu Angaben betreffend die Nennkapazitäten von sekundären Zellen und Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

Alternativ kann es sich bei der erfindungsgemäßen Zelle gemäß dem vorstehenden Merkmal c. um eine Knopfzelle handeln. Knopfzellen sind zylindrisch ausgebildet und weisen in Abgrenzung zu zylindrischen Rundzellen eine Höhe auf, die geringer als ihr Durchmesser ist. Sie eignen sich insbesondere zur Versorgung von kleinen elektronischen Geräten wie Uhren, Hörgeräten und kabellosen Kopfhörern mit elektrischer Energie.

Allgemein weisen Knopfzellen eine kreisrunden Oberseite auf, die zumindest in einem zentralen Teilbereich eben ausgebildet ist, und eine kreisrunde Unterseite, die zumindest in einem zentralen Teilbereich eben ausgebildet ist, und einen dazwischen liegenden ringförmigen Mantel. Der kürzeste Abstand zwischen einem Punkt auf dem ebenen Bereich oder Teilbereich der Oberseite und einem Punkt auf dem Bereich oder Teilbereich der Unterseite liegt bevorzugt im Bereich von 4 mm bis 15 mm (Höhe der Knopfzelle). Der maximale Abstand zwischen zwei gegenüberliegenden Punkten auf dem Mantel der Knopfzelle liegt bevorzugt im Bereich von 5 mm bis 25 mm (Durchmesser der Knopfzelle). Es gilt hierbei die Maßgabe, dass der maximale Abstand zwischen den zwei Punkten auf der Mantelseite größer ist als der Abstand zwischen den zwei Punkten auf der Ober- und der Unterseite. Im Unterschied zu einer zylindrischen Rundzelle ist die Gesamthöhe der Knopfzelle also im Allgemeinen kleiner als der Gesamtdurchmesser.

Die Nennkapazität der als Knopfzelle ausgebildeten erfindungsgemäßen Zelle beträgt in einer Ausführungsform als Lithium-Ionen-Zelle in der Regel bis zu 1500 mAh. Bevorzugt liegt die Nennkapazität im Bereich von 100 mAh bis 1000 mAh, besonders bevorzugt im Bereich von 100 bis 800 mAh.

Knopfzellen mit durch spiralförmiges Aufwickeln von bandförmigen Elektroden und mindestens einem bandförmigen Separator gefertigten Wickeln auf Lithiumionen-Basis sind beispielsweise aus der WO 2010/146154 A2, der WO 2012/048995 A1 und der WO 2010/089152 A1 bekannt.

Zylindrische Rundzellen und Knopfzellen können vorzugsweise ein zylindrisches Gehäuse aufweisen, das z.B. aus vernickeltem Stahl oder aus Edelstahl besteht. Das Gehäuse umfasst meist zwei metallische Gehäuseteile, zwischen denen eine elektrisch isolierende Dichtung angeordnet ist. Eines der Gehäuseteile steht in elektrischer Verbindung mit der von dem Gehäuse umschlossenen positiven Elektrode und ist entsprechend positiv gepolt. Das andere Gehäuseteil steht in elektrischer Verbindung mit der von dem Gehäuse umschlossenen negativen Elektrode und ist entsprechend negativ gepolt. Die Dichtung soll einen elektrischen Kontakt zwischen den entgegengesetzt gepolten Gehäuseteilen unterbinden. Darüber hinaus soll sie einem Entweichen und auch einem Eindringen von Flüssigkeit, Feuchtigkeit oder Gasen aus dem oder in das Gehäuse entgegenwirken.

Die elektrische Kontaktierung der Elektroden kann beispielsweise über Schweißverbindungen realisiert werden. Im Fall einer Knopfzelle können die Stromkollektoren der Elektroden unmittelbar an die Gehäuseteile geschweißt werden, wie es beispielsweise in der DE 20 2017 006 038 U1 beschrieben ist. Alternativ können sie an elektrische Leiter geschweißt werden, die wiederum mit den Gehäuseteilen verbunden werden.

Als zylindrische Rundzelle ist die Zelle hingegen bevorzugt durch die unmittelbar folgenden zusätzlichen Merkmale a. bis d. gekennzeichnet:
a. Die negative Elektrode und die positive Elektrode sind bandförmig ausgebildet und werden jeweils von einer Kompositelektrode gebildet, die jeweils einen Stromkollektor und eine auf den Stromkollektor aufgebrachte elektrochemisch aktive Komponente umfasst.
b. Die negative Elektrode und die positive Elektrode sind innerhalb des Wickels versetzt angeordnet, so dass ein Längsrand des Stromkollektors der negativen Elektrode aus einer endständigen Stirnseite und ein Längsrand des Stromkollektors der positiven Elektrode aus einer anderen endständigen Stirnseite des Wickels herausragt.
c. Der herausragende Längsrand des Stromkollektors der negativen Elektrode und/oder der herausragende Längsrand des Stromkollektors der positiven Elektrode sind für eine Kontaktierung mit einem Teil des Gehäuses der Zelle ausgebildet.
d. Die Zelle umfasst mindestens eine Kontaktplatte, die auf dem oder den für die Kontaktierung ausgebildeten Längsrändern aufliegen.

Zur Kontaktierungsind die jeweiligen Längsränder der Elektroden bevorzugt frei von Elektrodenmaterial. Kontaktierungen dieser Art sowie ausführlich in der WO 2017/215900 A1 beschrieben. Auf die WO 2017/215900 A1 wird hiermit vollumfänglich Bezug genommen.

Bei der Herstellung von Verbünden aus Elektroden und Separatoren wird üblicherweise darauf geachtet, dass es nicht zu einem stirnseitigen Überstehen entgegengesetzt gepolter Stromkollektoren kommt, da dies die Kurzschlussgefahr erhöhen kann. Bei der beschriebenen versetzten Anordnung gemäß dem Kontaktplattendesign ist die Kurzschlussgefahr jedoch minimiert, da die entgegengesetzt gepolten Stromkollektoren aus sich gegenüberliegenden Stirnseiten des Wickels austreten.

Den aus der versetzten Anordnung resultierenden Überstand der Stromkollektoren kann man sich zunutze machen, indem man die Längsränder mittels entsprechender Stromableiter möglichst über ihre gesamte Länge kontaktiert. Als Stromableiter kommen hierbei insbesondere Kontaktplatten in Frage, wie sie in der erwähnten WO 2017/215900 A1 beschrieben werden. Die hier beschriebenen Kontaktplatten können auch den Innenwiderstand innerhalb der erfindungsgemäßen Zelle sehr deutlich senken. Die beschriebene Anordnung kann das Auftreten großer Ströme somit sehr gut abfangen. Mit minimiertem Innenwiderstand reduzieren sich thermische Verluste bei hohen Strömen. Zudem wird die Abfuhr thermischer Energie über die Pole begünstigt.

Die Kontaktplatte kann wiederum mit einem Pol der erfindungsgemäßen Zelle, beispielsweise einem Gehäusepol, verbunden sein.

Bevorzugt handelt es sich bei der Kontaktplatte um eine Metallplatte mit einer Dicke im Bereich von 200 µm bis 1000 µm. Bevorzugt besteht die Kontaktplatte aus Aluminium, Titan, Nickel, Edelstahl oder vernickeltem Stahl.

Es gibt mehrere Möglichkeiten, wie die Kontaktplatte mit dem Längsrand verbunden werden kann.

Die Kontaktplatte kann mit dem Längsrand entlang einer linienartigen Kontaktzone über mindestens eine Schweißnaht und/oder mindestens einen Schweißpunkt verbunden sein. Der Längsrand kann erfindungsgemäß einen oder mehrere Abschnitte, die jeweils über ihre gesamte Länge über eine Schweißnaht durchgehend mit der Kontaktplatte verbunden sind, umfassen.

In einer möglichen Weiterbildung können sich der bzw. die mit der Kontaktplatte über ihre gesamte Länge durchgehend verbundenen Abschnitte über mindestens 25 %, bevorzugt über mindestens 50 %, besonders bevorzugt über mindestens 75 %, der Gesamtlänge des jeweiligen Längsrandes erstrecken.

Ganz besonders bevorzugt können der oder die Längsränder über ihre gesamte Länge durchgehend mit der Kontaktplatte verschweißt sein.

Die Kontaktplatte kann mindestens einen Schlitz und/oder mindestens eine Perforierung aufweisen. Diese dienen dazu, einer Verformung der Platte bei der Herstellung der Schweißverbindung entgegenzuwirken.

In bevorzugten Ausführungsformen hat die Kontaktplatte die Form einer Scheibe, insbesondere die Form einer kreisförmigen oder zumindest näherungsweise kreisförmigen Scheibe. Sie weist dann also einen äußeren kreisförmigen oderzumindest näherungsweise kreisförmigen Scheibenrand auf. Unter einer näherungsweise kreisförmigen Scheibe soll hierbei insbesondere eine Scheibe verstanden werden, die die Form eines Kreises mit mindestens einem abgetrennten Kreissegment, bevorzugt mit zwei bis vier abgetrennten Kreissegmenten, aufweist.

Besonders bevorzugt weist die erfindungsgemäße Zelle eine erste Kontaktplatte auf, die auf dem Längsrand des Stromkollektors der negativen Elektrode aufliegt, so dass sich eine linienartige erste Kontaktzone mit spiralförmiger Geometrie ergibt, und eine zweite Kontaktplatte, die auf dem Längsrand des Stromkollektors der positiven Elektrode aufliegt, so dass sich eine linienartige zweite Kontaktzone mit spiralförmiger Geometrie ergibt. Bevorzugte sind beide Kontaktplatten mit einem Pol der erfindungsgemäßen Zelle, beispielsweise einem Gehäuseteil, verbunden.

In besonders bevorzugten Ausführungsformen bestehen die erste Kontaktplatte und der Stromkollektor der negativen Elektrode beide aus dem gleichen Material. Dieses wird besonders bevorzugt aus der Gruppe mit Kupfer, Nickel, Titan, vernickeltem Stahl und Edelstahl gewählt.

Die zweite Kontaktplatte und der Stromkollektor der positiven Elektrode bestehen besonders bevorzugt beide aus dem gleichen Material aus der Gruppe mit Aluminium, Nickel, Titan, vernickelter Stahl und Edelstahl.

In einer besonders bevorzugten Ausgestaltung der erfindungsgemäßen Zelle ist die Zelle Bestandteil eines Batteriemoduls umfassend mehrere, bevorzugt gleichartige, elektrisch miteinander verschaltete elektrochemische Zellen. Derartige Batteriemodule eignen sich insbesondere für Anwendungen im Automobilbereich. Insbesondere bei solchen Anwendungen, die mit einer hohen Leistungsaufnahme und einer hohen Leistungsabgabe verbunden sind, sind zuverlässige Überwachungssysteme sinnvoll und wichtig, um irreguläre Betriebszustände rechtzeitig erkennen und gegebenenfalls beheben zu können.

Die Erfindung umfasst schließlich auch ein Verfahren zur Herstellung der beschriebenen Zelle, wobei dieses Verfahren insbesondere durch die folgenden Schritte gekennzeichnet ist:
a. Es wird ein zylindrischer Wickel mit einem zentralen Hohlraum bereitgestellt, der einen spiralförmig aufgewickelten Verbund aus mindestens einer bandförmigen negativen Elektrode, mindestens einem Separator und mindestens einer bandförmigen positiven Elektrode umfasst.
b. Es wird ein becherförmiges Gehäuseteil bereitgestellt, welches einen ringförmigen Gehäusemantel, einen Gehäuseboden und eine stirnseitige Öffnung aufweist.
c. Der Wickel wird durch die stirnseitige Öffnung in das Gehäuseteil eingeschoben.
d. Die stirnseitige Öffnung wird durch ein zweites, bevorzugt scheibenförmiges Gehäuseteil verschlossen, beispielsweise mit Hilfe eines Bördelprozesses.
e. Der Wickel wird mit einem Elektrolyten getränkt.
f. In den zentralen Hohlraum des Wickelswird mindestens ein Sensormittel oder mindestens ein Teil eines Sensormittels eingebracht, das Zustandsänderungen des Wickels qualitativ und/oder quantitativ erfassen kann.
g. Am Gehäuseboden wird ein Anzeige- und/oder Kontaktmittel angeordnet, das von dem mindestens einen Sensormittel erfasste Messwerte anzeigen und/oder über das diese Messwerte an eine Empfangs- und/oder Auswerteeinheit übertragen werden können.

Die angegebenen Schritte müssen keinesfalls in der angegebenen Reihe ausgeführt werden. So ist es beispielsweise möglich, das Anzeige- und/oder Kontaktmittel vor oder nach dem Einschieben des Wickels am Gehäuseboden anzuordnen. Auch das Einbringen des Sensormittels kann vor oder nach dem Einschieben des Wickels am Gehäuseboden erfolgen. Das Tränken des Wickels mit Elektrolyt muss gleichfalls nicht zwingend vordem Einbringen des Sensormittels oder nach dem Schließen der stirnseitigen Öffnung erfolgen. Im Allgemeinen ist es allerdings bevorzugt, den Wickel mit dem Elektrolyten zu versehen, nachdem der Wickel in das Gehäuse eingebracht wurde.

Bezüglich bevorzugter Ausgestaltungen der in den Verfahrensschritten verwendeten Zellkomponenten wird zur Vermeidung von Wiederholungen auf die obige Beschreibung der erfindungsgemä-ßen Zelle verwiesen.

Die negative Elektrode und die positive Elektrode werden bevorzugt nach den vorstehenden Schritten c. und d., bevorzugt jedoch vor Schritt e., elektrisch mit dem Gehäuse oder mit durch das Gehäuse führbaren elektrischen Leitern kontaktiert.

In besonders bevorzugten Ausgestaltungen des Herstellungsverfahrens ist es vorgesehen, dass das mindestens eine Sensormittel oder der mindestens eine Teil eines Sensormittels zusammen mit dem oben beschriebenen länglichen Trägerkörper und insbesondere mit dem oben beschriebenen länglichen Hohlkörper in den zentralen Hohlraum des Wickels eingebracht und insbesondere eingeschoben wird. Diese Maßnahme erlaubt eine besonders einfache Fertigung der Zelle mit verhältnismäßig wenigen Handgriffen, so dass dieses Herstellungsverfahren in besonderer Weise einer automatisierten Fertigung zugänglich ist.

Das oder die Sensormittel oder Teile von Sensormitteln werden vorzugsweise über eine zentrale Aussparung oder Durchbrechung in einer der Stirnseiten des Gehäuses, insbesondere in dem Gehäuseboden, in das Innere bzw. in den zentralen Hohlraum des Wickels eingebracht. In besonders bevorzugter Weise geschieht diese Einbringung des oder der Sensormittel oder Teile des oder der Sensormittel zusammen mit dem gegebenenfalls vorgesehenen länglichen Trägerkörper, der in den zentralen Hohlraum des Wickels eingeschoben wird. Die zentrale Aussparung oder Durchbrechung kann sich beispielsweise innerhalb der gegebenenfalls vorgesehenen PCB-Platine befinden, die als Teil des Gehäusebodens oder als Gehäuseboden das Gehäuse abschließen kann und dabei das Kontakt- und/oder Anzeigemittel der Zelle in der oben beschriebenen Weise bildet.

In einer besonders bevorzugten Ausgestaltung des Herstellungsverfahrens wird diese zentrale Öffnung in dem Gehäuseboden und gegebenenfalls in der PCB-Platine genutzt, um den Elektrolyten zu dosieren bzw. in das Innere der Zelle einzubringen. In diesem Zusammenhang kann es beispielsweise vorgesehen sein, dass zuerst der Elektrolyt eindosiert wird und dann der längliche Trägerkörper in das Innere bzw. in den zentralen Hohlraum des Wickels eingebracht wird. Dann wird das Gehäuse am Gehäuseboden dichtend verschlossen. Dies kann beispielsweise durch Kleben, Löten oder Verschweißen der vorhandenen Fugen und Kontaktbereiche vorgenommen werden.

Die übrige Fertigung der Zelle, beispielsweise eine Bördelung des Deckels und anderes, kann in an sich bekannterWeise erfolgen, wie es insbesondere bei zylindrischen Rundzellen oder Knopfzellen bekannt ist.

Die Anordnung des gegebenenfalls vorgesehenen Drucksensors kann beispielsweise auf der Oberfläche der gegebenenfalls vorgesehenen PCB-Platine oder in der Aussparung oder Durchbrechung in der PCB-Platine erfolgen, wobei dieser Drucksensor in bevorzugter Weise mit dem Inneren des als Hohlkörper ausgestalteten gegebenenfalls vorgesehenen länglichen Trägerkörpers in kommunizierender Verbindung steht, so dass Druckschwankungen oder Druckänderungen aus dem Inneren des Wickels direkt an den Drucksensor übertragen werden.

Die Integration der Sensormittel oder der Teile des Sensormittels in das Innere des Wickels kann statt mit einer stirnseitig angeordneten PCB-Platine auch in anderer Weise beispielsweise mittels einer Kunststoffdichtung oder einer Glas-Metall-Durchführung realisiert werden.

Die der PCB-Platine weist bevorzugt Kontakte auf, die in an sich bekannter Weise abgegriffen werden können. Zur Weiterverarbeitung und/oder Auswertung der Signale kann beispielsweise eine drahtgebundene oder drahtlose Verbindung zu weiteren Auswerte- und/oder Verarbeitungseinheiten vorgesehen sein kann. Die Kontaktstellen der PCB-Platine können beispielsweise in üblicher Weise verdrahtet werden, um eine Signalleitung an externe Einheiten zu bewerkstelligen. Die Signalweiterleitung kann gegebenenfalls auch drahtlos erfolgen, wobei im Allgemeinen eine drahtgebundene Signalweiterleitung aufgrund des geringeren Energiebedarfs bevorzugt ist.

Auf diese Weise kann beispielsweise ein zentrales Batteriemanagementsystem bei einer Verschaltung von einer Mehrzahl einzelner, erfindungsgemäßer Zellen realisiert werden. Beispielsweise können zwischen zehn und tausend, beispielsweise hundert, einzelne Zellen miteinander verschaltet und mit einem gemeinsamen Batteriemanagement- und Überwachungssystem überwacht und gesteuert werden.

Bei dem Zusammenbau kann die PCB-Platine beispielsweise in eine gegebenenfalls vorgesehene entsprechende kreisförmige Aussparung des metallischen Gehäuses, insbesondere auf der Bodenseite des Gehäuses, eingesetzt werden. Nach Einbringung der Sensormittel und gegebenenfalls des länglichen Trägerkörpers und gegebenenfalls des Elektrolyten kann die Platine abdichtend verklebt, verschweißt oder beispielsweise gelötet werden. Neben der Funktion der Kontaktierung und gegebenenfalls Anzeige und/oder Weiterleitung von Signalen übernimmt die PCB-Platine dabei zusätzlich auch eine abdichtende Funktion.

Bei derAusgestaltung Zelle im oben beschriebenen Kontaktplattendesign kann für die Einbringung der oder des Sensormittels oder der Teile eines Sensormittels in das Innere bzw. in den zentralen Hohlraum des Wickels eine zentrale Aussparung in einer der Kontaktplatten des Gehäuses vorgesehen sein.

Weitere Merkmale und Vorteile der Erfindung ergeben sich aus nachfolgenden Beschreibung von Ausführungsbeispielen in Verbindung mit den Zeichnungen. Hierbei können die einzelnen Merkmale jeweils für sich oder in Kombination miteinander verwirklicht sein.

### KURZBESCHREIBUNG DER ZEICHNUNGEN

In den Figuren zeigen schematisch:
- Fig. 1: Darstellung einer zylindrischen Rundzelle mit einem röhrenförmigen länglichen Trägerkörper im zentralen Hohlraum der Rundzelle;
- Fig. 2: Schnittdarstellung einer Ausführungsform einer erfindungsgemäßen Zelle;
- Fig. 3: Schnittdarstellung einer weiteren Ausführungsform einer erfindungsgemäßen Zelle als Ausschnitt; und
- Fig. 4: Schnittdarstellung einer weiteren Ausführungsform einer erfindungsgemäßen Zelle als Ausschnitt.

### DETAILLIERTE BESCHREIBUNG DERAUSFÜHRUNGSBEISPIELE

**Fig**. **1** zeigt als schematische Außenansicht eine zylindrische Rundzelle 10, wobei in dieser Darstellung die näheren Details zur Anordnung der Sensormittel gemäß der Erfindung nicht dargestellt sind. Die Zelle 10 umfasst ein Gehäuse mit einer ersten (deckelseitigen) Stirnseite 11 und einer zweiten (bodenseitigen) Stirnseite 12 sowie mit einem ringförmigen Gehäusemantel 13. Die Stirnseite 11 umfasst den positiven Pol 16 der Zelle 10. Die bodenseitige Stirnseite 12 bildet den negativen Pol der Zelle.

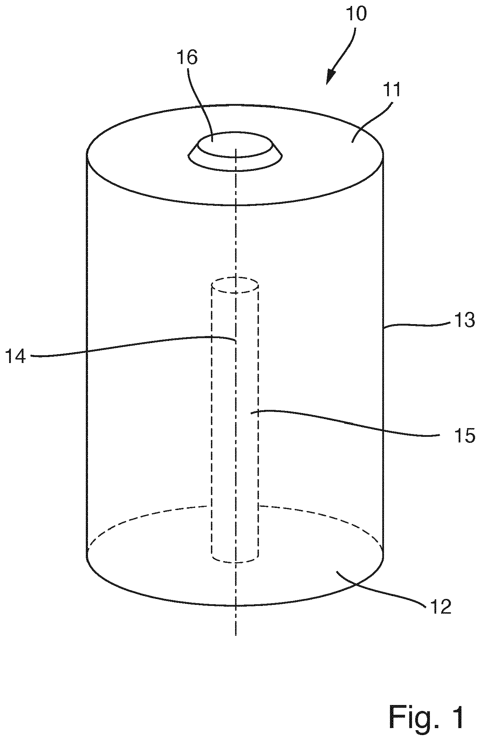

Dieses Gehäuse ist zur Aufnahme eines Wickels, der aus einem Verbund aus mindestens einer negativen Elektrode, mindestens einem Separator und mindestens einer positiven Elektrode gebildet ist vorgesehen. Der Wickel kann beispielsweise mit Hilfe von zusätzlichen Klebebändern stabilisiert sein. Der Verbund aus den Elektroden und dem Separator ist um eine in Fig. 1 als gestrichelte Linie 14 angedeutete Wickelachse gewickelt. Diese Wickelachse 14 durchläuft einen zentralen Hohlraum, der von dem hier nicht gezeigten Wickel umfasst ist. In diesem zentralen Hohlraum ist ein länglicher Trägerkörper 15 in Form eines Hohlkörpers angeordnet. DieserTrägerkörper 15 kann erfindungsgemäß zur Aufnahme von einem oder mehreren Sensormitteln vorgesehen sein oder kann selbst Teil eines Sensormittels sein.

In anderen Ausgestaltungen der erfindungsgemäßen Zelle kann auf einen solchen Trägerkörper 15 verzichtet werden, wobei in jedem Fall in dem zentralen Hohlraum, der von dem Wickel umfasst ist, mindestens ein Sensormittel oder mindestens ein Teil eines Sensormittels angeordnet wird.

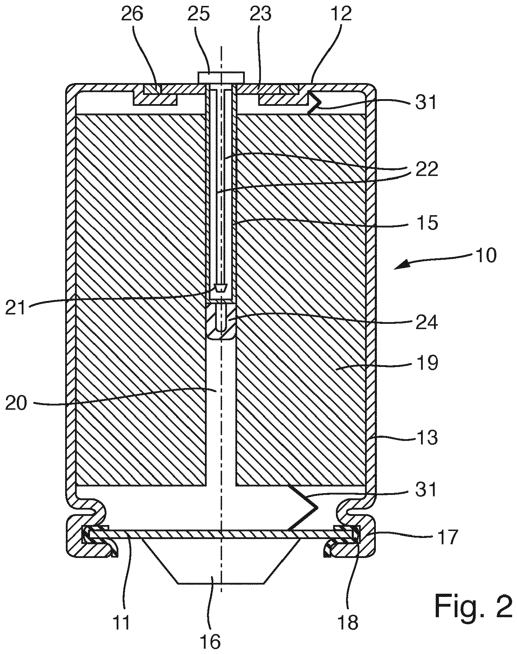

**Fig. 2** zeigt die erfindungsgemäße Zelle 10 aus Fig. 1 im Querschnitt mit weiteren Details. In dieser Darstellung ist die bodenseitige Stirnseite 12 oben dargestellt. Der Deckel 11 ist mittels Bördelung 17 an dem Gehäusemantel 13 fixiert. Die Dichtung 18 isoliert den Deckel 11 von dem Gehäusemantel 13. Innerhalb des Gehäuses befindet sich der Wickel 19. Eine der Elektroden des Wickels 19 ist über den Leiter 31 elektrisch mit dem Deckel 11 und damit auch mit dem Pol 16 verbunden. Die zweite Elektrode des Wickels 19 ist über den Leiter 32 elektrisch mit der bodenseitigen Stirnseite 12 verbunden.

Der Wickel 19 umfasst den zentralen Hohlraum 20. Innerhalb des zentralen Hohlraums 20 ist der längliche Trägerkörper 15 in Form eines Hohlkörpers angeordnet. Innerhalb des hohlen Trägerkörpers 15 befindet sich ein NTC-Element als Temperatursensor 21. Der Temperatursensor 21 wird über ein Paar elektrische Leiter 22 nach außen geführt und kontaktiert eine PCB-Platine 23, die Teil der bodenseitigen Stirnseite 12 des Gehäuses ist.

In dieser Ausgestaltung übernimmt der längliche Trägerkörper 15 zusätzlich die Funktion einer Referenzelektrode 24, indem an dem Ende des Trägerkörpers 15, der der Stirnseite 12 abgewandt ist, eine metallische Beschichtung mit einem definierten Potential vorgesehen ist, vorzugsweise eine Beschichtung mit metallischem Lithium oder gegebenenfalls mit einem anderen lithiumhaltigen Material.

In dieser Ausgestaltung als Referenzelektrode besteht der längliche Trägerkörper 15 bevorzugt aus einem metallischen Werkstoff, beispielsweise aus Kupfer, oder weist beispielsweise durch eine Beschichtung mit entsprechendem Material eine elektrische Leitfähigkeit auf, so dass mittels der Referenzelektrode 24 im Bereich der Stirnseite 12 eine absolute Spannungsdifferenz zwischen der Referenzelektrode 24 und der Anode oder der Kathode des Wickels 19 abgegriffen werden kann.

Weiterhin ist in dieser Ausgestaltung auf der PCB-Platine 23 ein Drucksensor 25 angeordnet, der in kommunizierender Verbindung mit dem Inneren des hohlen Trägerkörpers 15 steht. Hierbei ist der hohle Trägerkörper 15 mit mindestens einer hier nicht näher dargestellten Öffnung versehen, so dass ein Druckausgleich zwischen dem Innenraum des länglichen Trägerkörpers 15 und dem umgebenden Innenraum innerhalb der Zelle 10 stattfindet.

Im Zusammenhang mit dem Drucksensor 25 stellt der hohle Trägerkörper 15 also einen Teil des Sensormittels dar, da der sich gegebenenfalls ändernde Druck innerhalb der Zelle 10 über den hohlen Trägerkörper 15 an den an der Stirnseite befindlichen Drucksensor 25 weitergeleitet wird.

Die PCB-Platine ist dichtend in eine entsprechende Aussparung der bodenseitigen Stirnseite 12 des Gehäuses eingefügt, wobei eine umlaufende Dichtung 26 vorgesehen ist. In anderen Ausgestaltungen kann stattdessen beispielsweise eine Verklebung, Verschweißung, Verlötung oder Ähnliches vorgesehen sein.

Die Verwendung einer PCB-Platine 23 als Kontakt- und/oder Anzeigemittel für die Sensorik bietet eine leicht zu realisierende und vorteilhafte Ausgestaltungsmöglichkeit für die Kontaktierung der Sensorik. Gleichfalls ist es auch möglich, statt der PCB-Platine 23 beispielsweise eine vergleichbare Platte aus Glas oder Kunststoff oderÄhnlichem zu verwenden und eine anderweitige Kontaktierung der Sensorik vorzusehen.

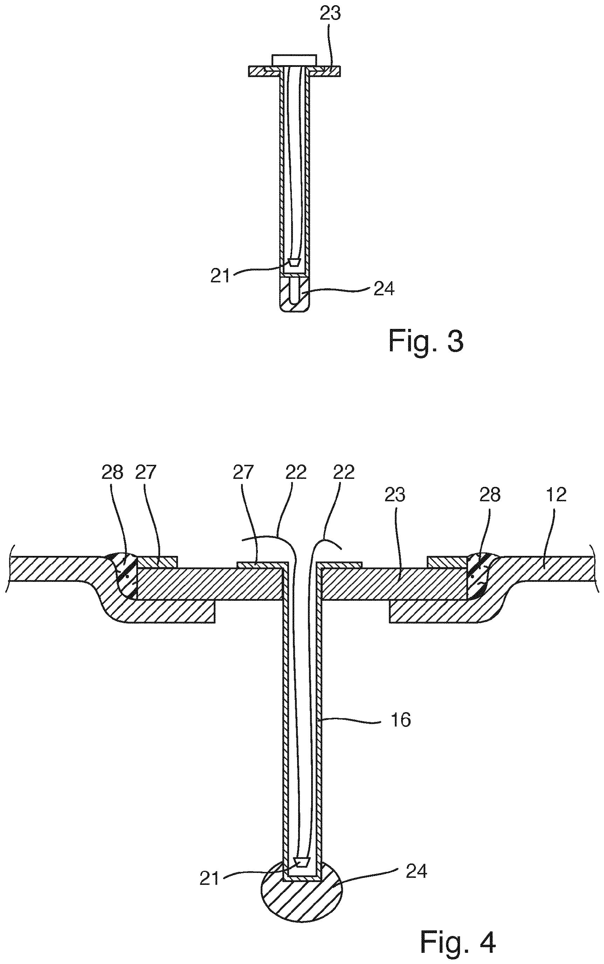

**Fig. 3** zeigt einen Ausschnitt aus einer erfindungsgemäßen Zelle, die weitgehend mit der Zelle 10 in Fig. 2 vergleichbar ist. Im Unterschied hierzu ist bei der in Fig. 3 gezeigten Ausgestaltung kein Drucksensor vorgesehen. Die hier gezeigte Zelle umfasst eine Kombination einer Referenzelektrode 24 und eines NTC-Elements als Temperatursensor 21, die an eine stirnseitige PCB-Platine 23 oder ein vergleichbares Element angebunden sind. Der hier gezeigt Ausschnitt zeigt im Prinzip die Elemente, die bei der Fertigung einer erfindungsgemäßen Zelle in den zentralen Hohlraum des Wickels der Zelle eingeschoben werden können, um so die Sensorik in die Zelle zu integrieren.

**Fig. 4** illustriert ebenfalls einen Ausschnitt aus einer erfindungsgemäßen Zelle mit einer hier tropfenförmig ausgestalteten Referenzelektrode 24 und einem NTC-Element als Temperatursensor 21. Diese Sensormittel sind an bzw. in dem länglichen und hohlen Trägerkörper 15 angeordnet. Die Zu- und Ableitungen 22 des Temperatursensors 21 werden nach außen geführt und sind für eine Kontaktierung mit den Leiterstrukturen 27 der PCB-Platine 23 vorgesehen.

Die PCB-Platine 23 ist in eine entsprechende Aussparung oder Durchbrechung der bodenseitigen Stirnseite 12 der Zelle eingesetzt und beispielsweise mit Lötzinn 28 oder einem Klebstoff oder einer anderweitigen Abdichtung dichtend in das Gehäuse eingefügt.

## Patentansprüche

1. Elektrochemische Zelle (10) mit den folgenden Merkmalen:
a. die Zelle umfasst mindestens eine bandförmige negative Elektrode,
b. die Zelle umfasst mindestens eine bandförmige positive Elektrode,
c. die mindestens eine negative Elektrode und die mindestens eine positive Elektrode bilden einen Verbund und sind dabei durch mindestens einen Separator voneinander getrennt,
d. der Verbund aus der mindestens einen negativen Elektrode, dem mindestens einen Separator und der mindestens einen positiven Elektrode ist spiralförmig um eine Wickelachse (14) gewickelt und bildet einen Wickel (19),
e. der Wickel (19) umfasst einen zentralen Hohlraum (20), durch den die Wickelachse (14) verläuft,
f. die Zelle weist ein Gehäuse mit einer ersten und einer zweiten Stirnseite (11, 12) und einem ringförmigen Gehäusemantel (13) auf, das einen Innenraum, in dem der Wickel (19) angeordnet ist, dichtend umschließt,
**gekennzeichnet durch** die folgenden Merkmale:
g. in dem zentralen Hohlraum (20) ist mindestens ein Sensormittel (24, 21) oder mindestens ein Teil eines Sensormittels (25) angeordnet, das Zustandsänderungen des Wickels (19) qualitativ und/oder quantitativ erfassen kann,
h. an der ersten und/oder der zweiten Stirnseite (11, 12) befindet sich ein Anzeige- und/oder Kontaktmittel (23), das von dem mindestens einen Sensormittel (24, 21, 25) erfasste Messwerte anzeigen und/oder über das diese Messwerte an eine Empfangs- und/oder Auswerteeinheit übertragen werden können.

2. Zelle nach Anspruch 1 mit mindestens einem der folgenden zusätzlichen Merkmale:
a. Das mindestens eine Sensormittel umfasst eine Referenzelektrode (24).
b. Das mindestens eine Sensormittel umfasst einen Temperatursensor (21).
c. Das mindestens eine Sensormittel umfasst einen Drucksensor (25).

3. Zelle nach Anspruch 2 mit mindestens einem der folgenden zusätzlichen Merkmale:
a. Die Referenzelektrode (24) ist in dem zentralen Hohlraum (20) angeordnet.
b. Das Sensormittel umfasst mindestens ein Verbindungsmittel (15), über das von der Referenzelektrode (24) ermittelte Messwerte an das Anzeige- und/oder Kontaktmittel (23) übermittelt werden können.

4. Zelle nach Anspruch 3 mit dem folgenden zusätzlichen Merkmal:
a. Die Referenzelektrode (24) umfasst Lithium oder ein lithiumhaltiges Material und das mindestens eine Verbindungsmittel (15) ist ein elektrischer Leiter.

5. Zelle nach einem der Ansprüche 2 bis 4 mit mindestens einem der folgenden zusätzlichen Merkmale:
a. Der Temperatursensor (21) ist in dem zentralen Hohlraum (20) angeordnet.
b. Das Sensormittel umfasst mindestens ein Verbindungsmittel (22), über das von dem Temperatursensor (21) ermittelte Messwerte an das Anzeige- und/oder Kontaktmittel (23) übermittelt werden können.

6. Zelle nach Anspruch 5 mit dem folgenden zusätzlichen Merkmal:
a. Der Temperatursensor (21) ist ein temperaturabhängiger Widerstand oder umfasst einen temperaturabhängigen Widerstand und das mindestens eine Verbindungsmittel umfasst einen elektrischen Leiter (22).

7. Zelle nach einem der vorhergehenden Ansprüche mit dem folgenden zusätzlichen Merkmal:
a. In dem zentralen Hohlraum (20) des Wickels (19) ist ein länglicher Trägerkörper (15), insbesondere ein länglicher Hohlkörper, angeordnet.

8. Zelle nach Anspruch 7 mit mindestens einem der folgenden zusätzlichen Merkmale:
a. Der längliche Trägerkörper (15) besteht zu mindest teilweise aus Glas und/oder Keramik und/oder Metall und/oder Kunststoff.
b. Der längliche Trägerkörper (15) ist zumindest in Teilbereichen oder vollständig elektrisch leitend ausgebildet.
c. Der längliche Trägerkörper (15) ist mit elektrisch leitfähigem Material zumindest teilweise beschichtet.
d. Der längliche Trägerkörper (15) ist elektrisch von dem Gehäuse und/oder mindestens einer der Elektroden entkoppelt.
e. Der längliche Trägerkörper (15) ist mit mindestens einer der Stirnseiten (11, 12) des Gehäuses dichtend verbunden.

9. Zelle nach einem der Ansprüche 7 oder 8 mit mindestens einem der folgenden Merkmale:
a. Der Drucksensor (25) ist an einer der Stirnseiten (12) des Gehäuses angeordnet.
b. Das Sensormittel umfasst den in den zentralen Hohlraum hineinragenden länglichen Hohlkörper (15), über den der von dem Gehäuse umschlossene Innenraum mit einem Drucksensor (25) in kommunizierender Verbindung steht.
c. Der Drucksensor (25) ist ein Piezo-Drucksensor.

10. Zelle nach einem der Ansprüche 7 bis 9 mit mindestens einem der folgenden zusätzlichen Merkmale:
a. Der längliche Trägerkörper (15) ist zur Temperierung der Zelle (10) eingerichtet.
b. Der längliche Trägerkörper (15) steht mit einer externen Temperierungseinrichtung in Kontakt.

11. Zelle nach einem der vorhergehenden Ansprüche mit einem der folgenden zusätzlichen Merkmale:
a. Das Anzeige- und/oder Kontaktmittel umfasst eine PCB-Platine (23).
b. Das Anzeige- und/oder Kontaktmittel ist eine PCB-Platine (23)
c. Das Anzeige- und/oder Kontaktmittel ist auf einer PCB-Platine angeordnet.

12. Zelle nach Anspruch 11 mit mindestens einem der folgenden zusätzlichen Merkmale:
a. Die PCB-Platine (23) weist einezentrale Aussparung oder Durchbrechung zur Aufnahme mindestens eines Sensormittels (24, 21, 25) und/oder eines länglichen Trägerkörpers (15) gemäß Anspruch 9 auf.
b. Die PCB-Platine (23) ist dichtend mit einem umgebenden Bereich der Stirnseite (11, 12) oder mit dem umgebenden Gehäusemantel verbunden.
c. Die PCB-Platine (23) ist dichtend mit einem umgebenden Bereich der Stirnseite (11, 12) oder mit dem umgebenden Gehäusemantel verbunden.
d. Die PCB-Platine (23) bildet ein Teil des Gehäuses der Zelle, insbesondere die Stirnseite oder ein Teil der Stirnseite des Gehäuses.

13. Zelle nach einem der vorhergehenden Ansprüche mit mindestens einem der folgenden zusätzlichen Merkmale:
a. Die Zelle (10) ist eine Lithium-Ionen-Zelle.
b. Die Zelle (10) ist eine zylindrischen Rundzelle.
c. Die Zelle (10) ist eine Knopfzelle.

14. Zelle nach einem der vorhergehenden Ansprüche mit den folgenden zusätzlichen Merkmalen:
a. Die negative Elektrode und die positive Elektrode sind bandförmig ausgebildet und werden jeweils von einer Kompositelektrode gebildet, die jeweils einen Stromkollektor und eine auf den Stromkollektor aufgebrachte elektrochemisch aktive Komponente umfasst, und
b. die negative Elektrode und die positive Elektrode sind innerhalb des Wickels versetzt angeordnet, so dass ein Längsrand des Stromkollektors der negativen Elektrode aus einer endständigen Stirnseite und ein Längsrand des Stromkollektors der positiven Elektrode aus einer anderen endständigen Stirnseite des Wickels herausragt, und
c. der herausragende Längsrand des Stromkollektors der negativen Elektrode und/oder der herausragende Längsrand des Stromkollektors der positiven Elektrode sind für eine Kontaktierung mit einem Teil des Gehäuses der Zelle ausgebildet, und
d. die Zelle umfasst mindestens eine Kontaktplatte, die auf dem oder den für die Kontaktierung ausgebildeten Längsrändern aufliegt.

15. Verfahren zur Herstellung einer Zelle gemäß einem der Ansprüche 1 bis 14 mit den folgenden Schritten:
a. Es wird ein zylindrischer Wickel mit einem zentralen Hohlraum bereitgestellt, der einen spiralförmig aufgewickelten Verbund aus mindestens einer bandförmigen negativen Elektrode, mindestens einem Separator und mindestens einer bandförmigen positiven Elektrode umfasst.
b. Es wird ein becherförmiges Gehäuseteil bereitgestellt, welches einen ringförmigen Gehäusemantel (13), einen Gehäuseboden und eine stirnseitige Öffnung aufweist.
c. Der Wickel (19) wird durch die stirnseitige Öffnung in das Gehäuseteil eingeschoben.
d. Die stirnseitige Öffnung wird durch ein zweites, bevorzugt scheibenförmiges Gehäuseteil verschlossen.
e. Der Wickel (19) wird mit einem Elektrolyten getränkt.
f. In den zentralen Hohlraum des Wickels wird mindestens ein Sensormittel oder mindestens ein Teil eines Sensormittels eingebracht, das Zustandsänderungen des Wickels qualitativ und/oder quantitativ erfassen kann.
g. Am Gehäuseboden (12) wird ein Anzeige- und/oder Kontaktmittel (23) angeordnet, das von dem mindestens einen Sensormittel (24, 21, 25) erfasste Messwerte anzeigen und/oder über das diese Messwerte an eine Empfangs- und/oder Auswerteeinheit übertragen werden können.
